# EUROPÄISCHE PATENTSCHRIFT

(11) **EP 1 199 260 B1**
(45) Veröffentlichungstag und Bekanntmachung des Hinweises auf die Patenterteilung: **11.08.2004**
(21) Anmeldenummer: 01123392.1
(22) Anmeldetag: 11.10.2001
(51) Int. Cl.: B65G 17/26, B65G 17/08

(54) **Fördervorrichtung**
Conveyor
Convoyeur

(30) Priorität: 18.10.2000 DE 10051655
(43) Veröffentlichungstag der Anmeldung: 24.04.2002
(73) Patentinhaber: Jörg von Seggern Maschinenbau GmbH, 26133 Oldenburg (DE)
(72) Erfinder: von Seggern, Jörg, 26160 Bad Zwischenahn (DE)
(74) Vertreter: Philipp, Matthias, Dr.

(56) Entgegenhaltungen:
- EP-A- 0 175 483
- FR-A- 1 070 445
- FR-A- 1 249 144
- GB-A- 1 060 219
- US-A- 4 928 810
- US-A- 5 560 473

## Beschreibung

Die Erfindung betrifft eine Fördervorrichtung zum Transportieren von Gegenständen, mit einem mit in gegenseitigen Abständen angeordneten Mitnehmern versehenen, endlos umlaufend geführten Förderstrang.

Derartige mit Mitnehmern versehene Fördervorrichtungen werden bspw. in der Nahrungsmittelindustrie zum Versiegeln von zuvor gefüllten Schalen verwendet, wobei die einzelnen Schalen einer Siegelvorrichtung in stets gleichen Abständen zugeführt werden müssen und die Siegelvorrichtung die Schalen gruppenweise versiegelt, z.B. jeweils 4 Schalen je Arbeitstakt. Die Mitnehmer gewährleisten einen festen gegenseitigen Abstand der Schalen auch dann, wenn die Oberseite des Förderstrangs, bspw. eines Förderbandes, durch Kontakt mit dem abgefüllten Nahrungsmittel verschmutzt und rutschig ist.

Solche Fördervorrichtungen haben sich in der Praxis an sich bewährt, weisen aber den Nachteil auf, daß eine Veränderung des gegenseitigen Abstands der Mitnehmer, die bspw. bei Verwendung anderer Versiegelungsvorrichtungen oder anderer Gegenstände erforderlich ist, einen relativ großen Aufwand bedeutet, wobei die einzelnen Mitnehmer von dem Förderstrang gelöst und an anderer Stelle erneut befestigt werden müssen.

Die Offenlegungsschriften FR-A-1 249 144 und US-A-5 560 473 beschreiben parallel verlaufende Förderketten mit bezüglich ihrer Drehstellung relativ zueinander verstellbaren Kettenrädern. Sie sind die Grundlage für den Oberbegriff du Anspruchs 1.

Die Aufgabe der Erfindung besteht darin, eine gattungsgemäße Fördervorrichtung dahingehend zu verbessern, daß die Veränderung des gegenseitigen Abstands der Mitnehmer einfacher durchgeführt werden kann.

Diese Aufgabe wird erfindungsgemäß durch eine Fördervorrichtung zum Transportieren von Gegenständen gemäß dem Anspruch 1 gelöst.

Es kann vorgesehen sein, daß die Mitnehmer auf den Einzelketten in Förderrichtung verstellbar gehalten sind.

Bevorzugt ist vorgesehen, daß die Mitnehmer jedes Einzelstrangs in festen, insbesondere gleichen gegenseitigen Abständen angeordnet sind.

Vorzugsweise weisen die Mitnehmer alle Einzelketten quer zur Förderrichtung übergreifende Mitnehmerleisten auf.

Es kann vorgesehen sein, daß auf jeder Einzelkette die gleiche Anzahl von Mitnehmern angeordnet ist.

In einer bevorzugten Ausführungsform ist vorgesehen, daß sämtliche Einzelkette über eine Justierwalze geführt sind, die aus nebeneinander angeordneten, in unterschiedliche Drehstellungen relativ zueinander verstellbaren, jeweils eine Einzelkette aufnehmenden Kettenrädern gebildet ist. Die Kettenräder können stufenlos oder stufenweise rastend relativ zueinander verstellbar sein. Die Justierwalze kann als Umlenk- und/oder Antriebseinrichtung ausgebildet sein.

Insbesondere zur Anwendung im Nahrungsmittelbereich kann vorgesehen sein, daß die Ketten ganz oder teilweise aus Kunststoff bestehen. Die Ketten können aus einteilig ausgebildeten, miteinander verrastbaren Kettengliedern bestehen, die jeweils einen Zapfenabschnitt mit zwei zylindrischen Zapfen und einem gegabelten Buchsenabschnitt mit Zapfenaufnahmebohrungen aufweisen.

Jedes Kettenglied kann einen Eingriffvorsprung zum formschlüssen Zusammenwirken mit einem Antriebsrad aufweisen.

Vorzugsweise weisen die Kettenglieder gerade Oberkanten bzw. ebene Oberseiten auf, so daß ebene Stellflächen für zu transportierende Gegenstände gebildet werden.

Es kann vorgesehen sein, daß die Mitnehmerleisten einteilig mit einem Kettenglied ausgebildet sind.

Die Erfindung wird nachfolgend anhand eines Ausführungsbeispiels erläutert, wobei auf eine Zeichnung Bezug genommen ist, in der
Fig. 1 eine schematische Draufsicht auf eine erste Ausführungsform einer erfindungsgemäßen Fördervorrichtung zeigt, wobei sich die Einzelstränge in einer bestimmten Konfiguration befinden;
Fig. 2 eine Seitenansicht auf einen Ausschnitt des Förderstrangs einer erfindungsgemäßen Fördervorrichtung zeigt, wobei sich die Einzelstränge in einer anderen Konfiguration befinden;
Fig. 3 eine Seitenansicht entsprechend Fig. 2 zeigt, wobei sich die Einzelstränge in einer weiteren unterschiedlichen Konfiguration befinden und zu transportierende Gegenstände (Schalen) auf dem Förderstrang dargestellt sind;
Fig. 4 und 5 schematische Draufsichten auf eine erfindungsgemäße Fördervorrichtung zeigen, wobei unterschiedliche Konfigurationen der Einzelstränge dargestellt sind;
Fig. 6 eine Draufsicht auf ein Kettenglied eines Einzelstrangs zeigt;
Fig. 7 eine Seitenansicht des Kettenglieds nach Fig. 6 zeigt;
Fig. 8 eine Ansicht des Kettenglieds nach Fig. 6 und 7 von unten zeigt;
Fig. 9 eine Seitenansicht eines Kettenrades zeigt;
Fig. 10 eine Draufsicht des Kettenrades nach Fig. 9 zeigt;
Fig. 11 eine Seitenansicht eines Kettenglieds mit Mitnehmer zeigt;
Fig. 12 bis 15 Draufsichten auf mit Mitnehmer versehene Kettenglieder zeigen, wobei der Mitnehmer in unterschiedlichen Stellungen auf dem Kettenglied angeordnet ist.

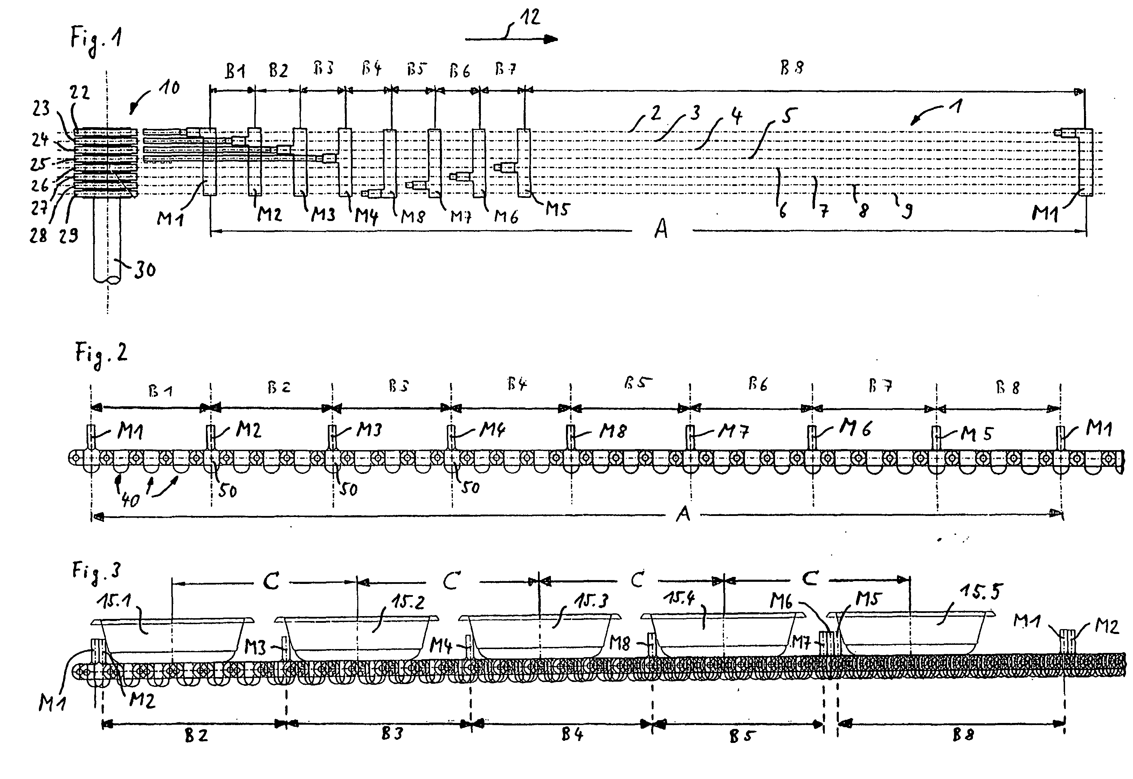

Zur Erläuterung der grundsätzlichen Funktionsweise einer erfindungsgemäßen Fördervorrichtung sei zunächst auf Fig. 1 bis 5 Bezug genommen. Fig. 1 zeigt in einer schematischen Draufsicht wesentliche Elemente einer Fördervorrichtung, nämlich einen Förderstrang 1, der aus mehreren, im erläuterten Beispiel aus acht Einzelsträngen 2 bis 9 zusammengesetzt ist, und eine Justierwalze 10, über die der Förderstrang 1 läuft. Die parallel angeordneten Einzelstränge 2 bis 9 bestehen im vorliegenden Beispiel aus Ketten, könnten aber alternativ aus einem beliebigen flexiblen, dehnungsfreien Material bestehen, bspw. aus Gurten, Riemen, Zahnriemen oder Stahlseilen. In bestimmten vorgegebenen Abständen A sind auf den Einzelsträngen Mitnehmer M1 bis M8 angebracht. Jeder Mitnehmer ist als eine sämtliche Einzelstränge quer übergreifende Mitnehmerleiste ausgebildet, die an einem Einzelstrang in geeigneter Weise fixiert ist. Die Anordnung ist so, daß in Förderrichtung (Pfeil 12) auf einen Mitnehmer M1 des Einzelstrangs 2 ein Mitnehmer M2 des Einzelstrangs 3 folgt, auf diesen ein Mitnehmer M3 des Einzelstrangs 4 folgt, auf diesen ein Mitnehmer M4 des Einzelstrangs 5 folgt, auf den ein Mitnehmer M8 des Einzelstrangs 9 folgt, auf den ein Mitnehmer M7 des Einzelstrangs 8 folgt, auf den ein Mitnehmer M6 des Einzelstrangs 7 folgt, auf den schließlich ein Mitnehmer M5 des Einzelstrangs 6 folgt. Der auf den Mitnehmer M5 folgende Mitnehmer ist wiederum ein Mitnehmer M1 des Einzelstrangs 2, mit dem sich die Anordnung wiederholt, da sämtliche Mitnehmer M1 bis M8 jeweils in vorgegebenen Abständen A auf den Einzelsträngen angeordnet sind.

Die Justierwalze 10 ist aus einer der Anzahl von Einzelsträngen entsprechenden Zahl von Kettenrädern bzw. -scheiben 22 bis 29 gebildet, über die jeweils formschlüssig zusammenwirkend ein Einzelstrang geführt ist und die ihrerseits auf einer Welle 30 gelagert sind. Im dargestellten Beispiel ist die Welle 30 angetrieben und die Kettenräder 22 bis 29 sind über eine nicht dargestellte Kupplungsvorrichtung drehfest miteinander verriegelbar und mit der Welle 30 verbindbar. Im entkuppelten Zustand ist jedes einzelne Kettenrad relativ zu den anderen und relativ zu der Welle 30 verdrehbar, so daß aufgrund des formschlüssigen Zusammenwirkens zwischen den Einzelsträngen 2 bis 9 und den Kettenrädern 22 bis 29 jeder Einzelstrang in Umlaufrichtung (d.h. in oder entgegensetzt zur Förderrichtung 12) verstellt werden kann. Nachdem eine Einstellung vorgenommen worden ist und die Kettenräder wieder drehfest mit der Welle 30 verbunden sind, ist die eingestellte Konfiguration (gegenseitige Stellung) der einzelnen Mitnehmer des Förderstrangs 1 für den weiteren Betrieb der Fördervorrichtung unveränderlich.

Fig. 1 zeigt eine Anordnung der Mitnehmer M1 bis M8, bei denen die gegenseitigen Abstände der Mitnehmer M1 und M2 mit B1 bezeichnet sind, die gegenseitigen Abstände der Mitnehmer M2 und M3 mit B2, die gegenseitigen Abstände der Mitnehmer M3 und M4 mit B3, die gegenseitigen Abstände der Mitnehmer M4 und M8 mit B4, die gegenseitigen Abstände der Mitnehmer M8 und M7 mit B5, die gegenseitigen Abstände der Mitnehmer M7 und M6 mit B6, die gegenseitigen Abstände der Mitnehmer M6 und M5 mit B7 und die gegenseitigen Abstände der Mitnehmer M5 und M1 mit B8, wobei die Mitnehmer M2 bis M8 einen relativ geringen gegenseitigen Abstand und einen geringen Abstand zum Mitnehmer M1 aufweisen, so daß der verbleibende Abstand B8 relativ groß ist. Bei einer solchen Anordnung könnten sieben relativ kleine Gegenstände innerhalb der relativ kleinen Abstände B1 bis B7 aufgenommen werden, während eine relativ großer Gegenstand (oder mehrere kleine) zwischen den Mitnehmern M5 und M1 aufgenommen werden könnten. Die dargestellte Anordnung M1, M2 ... M1 wiederholt sich periodisch über die Länge des Förderstrangs 1.

Fig. 2 zeigt eine andere Konfiguration der Einzelstranganordnung nach Fig. 1, wobei die Einzelstränge 3 bis 9 mit den Mitnehmern M2 bis M8 relativ zu dem Einzelstrang 2 soweit verschoben bzw. verstellt worden sind, daß sich gleiche Abstände B1 bis B8 zwischen sämtlichen Mitnehmern ergeben. Eine solche Anordnung eignet sich zur Aufnahme von acht gleich großen Gegenständen.

Fig. 3 zeigt in einer Ansicht ähnlich wie Fig. 2 eine Konfiguration zur Aufnahme von fünf gleich großen Schalen 15.1 bis 15.5. Wie Fig. 3 zeigt, ist der Einzelstrang 3 so verschoben worden, daß dessen Mitnehmer M2 unmittelbar gegen die Mitnehmer M1 anliegen. Zwischen den Mitnehmern M2 und M3 der Einzelstränge 3 und 4 ist ein Abstand B2 eingestellt, zwischen den Mitnehmern M3 und M4 der Einzelstränge 4 und 5 ein gleichgroßer Abstand B3, zwischen den Mitnehmern M4 und M8 der Einzelstränge 5 und 9 ein gleichgroßer Abstand B4 und zwischen den Mitnehmern M8 und M7 der Einzelstränge 9 und 8 ein ebenfalls gleichgroßer Abstand B5. Die Einzelstränge 7 und 6 sind so verstellt, daß deren Mitnehmer M6 und M5 eng aneinander und gegen die Mitnehmer M7 des Einzelstrangs 8 anliegen, wodurch sich ein (verbleibender) Abstand B8 zwischen den Mitnehmern M5 und M1 ergibt.

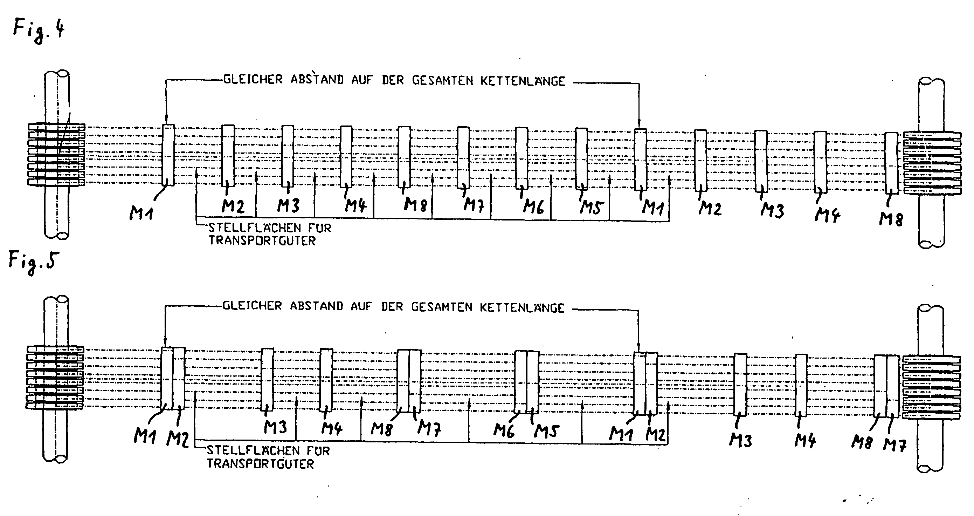

Fig. 4 und 5 erläutern nochmals die Variationsmöglichkeiten anhand zweier unterschiedlicher Konfigurationen, wobei Fig. 4 gleiche Abstände zwischen sämtlichen Mitnehmern in Draufsicht zeigt, wodurch gleich lange Stellflächen für zu transportierende Gegenstände gebildet werden. Die Anzahl von Stellflächen zwischen zwei aufeinanderfolgenden Mitnehmern eines Einzelstrangs entspricht hierbei der Anzahl der Einzelstränge, d.h. acht. Fig. 5 zeigt eine andere Anordnung, bei der die Einzelstränge so verstellt worden sind, daß jeweils die Mitnehmer M1 und M2, M8 und M7 sowie M6 und M5 aneinanderliegen. Dadurch ergeben sich innerhalb von zwei aufeinanderfolgenden Mitnehmern eines Einzelstrangs drei Stellflächen weniger als in Fig. 4, d.h. fünf Stellflächen, die zudem in dem dargestellten Beispiel unterschiedlich lang eingestellt sind. Durch die erfindungsgemäße Aufteilung eines Förderstrangs in zueinander verstellbare Einzelstränge mit festen Mitnehmern ist somit eine gruppenweise Bildung von Stellflächen möglich, wobei sich die Gruppe regelmäßig im Abstand der Mitnehmer eines Einzelstrangs regelmäßig wiederholt. Eine derartige Gruppe von Stellflächen ist in Fig. 1 und 2 mit deren Längen B1 bis B8 angegeben, in Fig. 3 mit den Längen B2 bis B5 und B8 und ergibt sich in Fig. 4 und 5 in entsprechender Weise durch die Stellflächen innerhalb zweier Mitnehmer desselben Einzelstrangs, bspw. zwischen zwei Mitnehmern M1, zwei Mitnehmern M2 usw..

Wie insbesondere Fig. 3 zu entnehmen ist, wirken die einzelnen Mitnehmer M1 bis M8 in diesem Fall als vorschiebende Mitnehmer, d.h. ein zu transportierender Gegenstand, bspw. eine Schale, wird lagemäßig nicht von zwei (in Förderrichtung davor und dahinter angeordneten) Mitnehmern fixiert, sondern lediglich durch einen Mitnehmer geschoben. Da insgesamt acht Einzelstränge und somit acht Mitnehmer je Gruppe vorhanden sind, ergibt sich die Möglichkeit, im Rahmen der gesamten, je Gruppe zur Verfügung stehenden Länge A (Fig. 1 und 2) Anzahl und gegenseitigen Abstand C (Fig. 3) der einzelnen Gegenstände innerhalb einer Gruppe frei einzustellen.

Wenn es umgekehrt in einer speziellen Ausführungsform gewünscht ist, die zu transportierenden Gegenstände mit jeweils einem in Förderrichtung vor und hinter dem Gegenstand liegenden Mitnehmer räumlich eindeutig zu fixieren, z.B. dann, wenn die Gegenstände relativ starken Beschleunigungen (Taktbetrieb) unterworfen sind, müssen (mindestens) doppelt so viele Einzelstränge (bzw. unabhängig voneinander verstellbare Mitnehmer je Gruppe) vorhanden sein, wie die Anzahl von Gegenständen je gewünschter Gruppe beträgt, d.h. bei Gruppen von je zwei Gegenständen müssen vier Einzelstränge vorhanden sein, bei einer Gruppengröße von drei Gegenständen sechs Einzelstränge usw.. Bei einer derartigen erfindungsgemäß ausgeführten Bauform, die die Aufgabe hat, aus mindestens je zwei Gegenständen bestehende Gruppen von Gegenständen aufzunehmen, und zwar einstellbar bezüglich der Größe der Gegenstände und deren gegenseitigen Abstands, beträgt die Anzahl der Einzelstränge bzw. der Mitnehmer je Gruppe vier, sechs oder ein größeres Vielfaches von zwei, wobei vorschiebende Mitnehmer und solche, die in Förderrichtung vor dem betreffenden Gegenstand liegen, abwechselnd angeordnet sind.

Zur weiteren Erläuterung dieses Sachverhalts sei nochmals auf Fig. 3 Bezug genommen, in der eine beispielhafte Anordnung der acht Mitnehmer zum Transport von fünf einzelnen Gegenständen je Gruppe dargestellt ist. Hierbei sind einzelne Mitnehmer (M1, M2; M5, M6, M7) dicht zusammengeschoben, da nur fünf Gegenstände je Gruppe vorhanden sind. Alternativ könnten mit den acht einzelnen Mitnehmern bis zu acht Gegenstände je Gruppe transportiert werden, wenn alle Mitnehmer als vorschiebende Mitnehmer (nur ein am in Förderrichtung gesehen hinteren Ende des Gegenstands angeordneter Mitnehmer je Gegenstand) eingesetzt werden. Wenn alternativ einzelne oder sämtliche Gegenstände der Gruppe von je zwei Mitnehmern "fixiert" werden sollen, ergibt sich eine entsprechend geringere Anzahl von Gegenständen je Gruppe, im vorliegenden Beispiel vier, wenn alle Gegenstände von je zwei Mitnehmern lagefixiert transportiert werden.

Die Erfindung ermöglicht durch die gleichzeitige Verstellbarkeit sämtlicher Mitnehmer von Einzelsträngen unabhängig voneinander die schnelle Einstellung und Veränderung derartiger Gruppen über die gesamte Länge des Förderstrangs.

Obwohl bevorzugt vorgesehen ist, daß die Mitnehmer sämtlicher Einzelstränge gleichen gegenseitigen Abstand aufweisen, muß dies nicht zwingend so sein. Beispielsweise könnten ein oder mehrere Einzelstränge unregelmäßig beabstandete Mitnehmer oder kleinere Mitnehmerabstände aufweisen, wenn dies in bestimmten Einsatzfällen zweckmäßig ist.

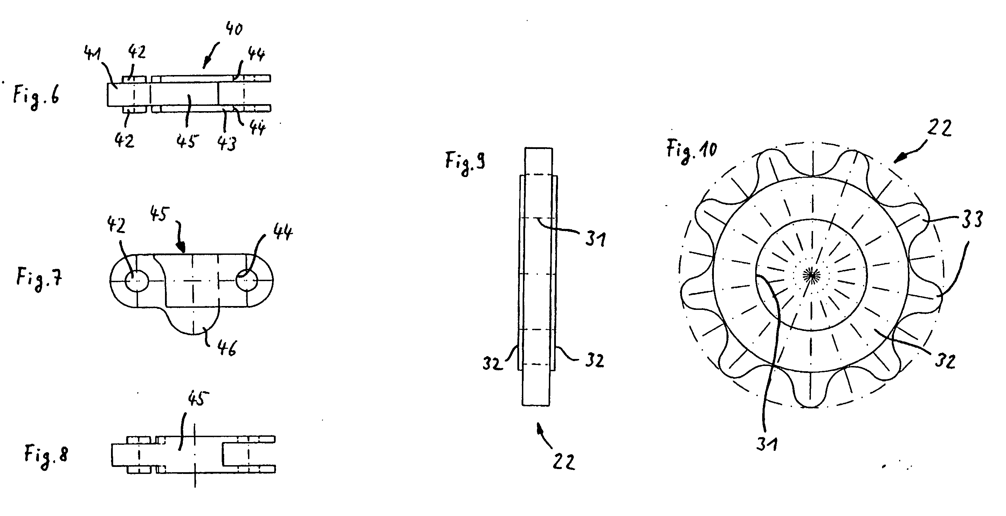

Wie Fig. 2 und 3 erkennen lassen, sind die Einzelstränge in dem dort dargestellten Ausführungsbeispiel aus Ketten gebildet, deren Kettenglieder 40 in Fig. 6 bis 8 in unterschiedlichen Ansichten erläutert sind. Die Kettenglieder 40 sind einteilig aus Kunststoff hergestellt, was insbesondere im Lebensmittelbereich einen erheblichen Vorteil hinsichtlich Hygiene und Reinigung darstellt, und weisen einen Zapfenabschnitt 41 mit zwei zylindrischen Zapfen 42 sowie einen gegabelten Buchsenabschnitt 43 mit zwei Zapfenaufnahmebohrungen 44 auf. Die Kettenglieder können werkzeuglos verbunden und gelöst werden und weisen darüber hinaus keinerlei bewegliche Teile auf. Eine Oberseite 45 der Kettenglieder 40 ist eben ausgeführt, so daß ebene Stellflächen für die zu transportierenden Gegenstände gebildet werden, während an einer gegenüberliegenden Unterseite-Eingriffsvorsprünge 46 ausgebildet sind, die mit den Kettenrädern 22 bis 29 formschlüssig zusammenwirken.

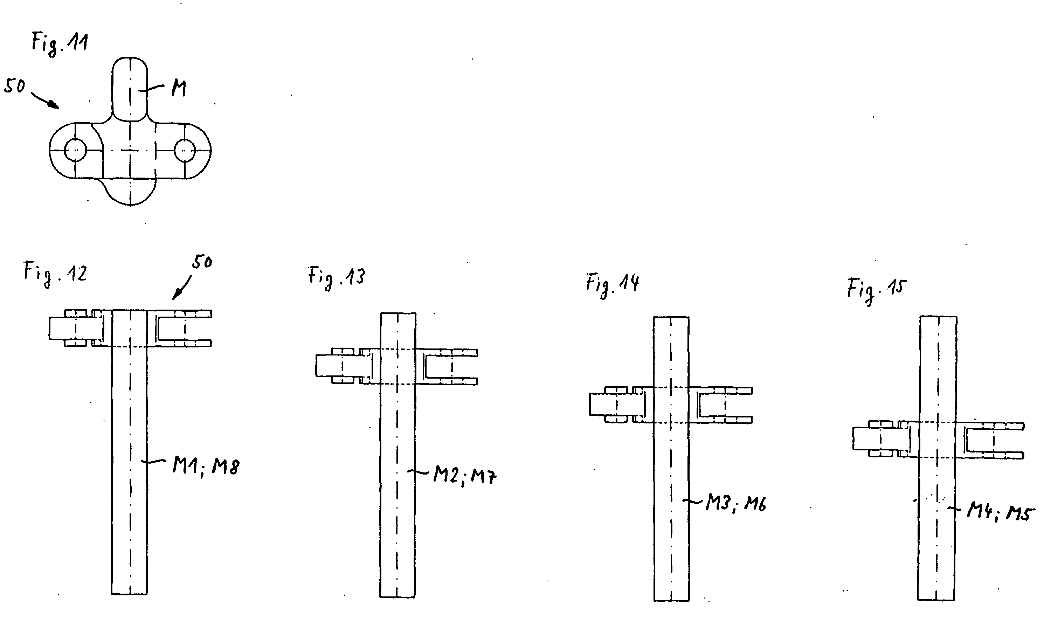

Fig. 9 und 10 erläutern beispielhaft ein Kettenrad 22, das eine Innenbohrung 31 zum Aufsetzen auf die Welle 30 aufweist. Abgerundete Zähne 33 wirken formschlüssig mit den Antriebsvorsprüngen 46 der Kettenglieder 40 zusammen. Eine wahlweise drehfeste oder gelöste Verbindung der Kettenräder 22 bis 29 mit der Welle 30 kann bspw. dadurch erreicht werden, daß das Paket von Kettenrädern in axialer Richtung zusammengepreßt wird, so daß die einzelnen Kettenräder durch Reibschluß an Reibflanken 32 reibschlüssig miteinander und über eine nicht dargestellte, mit der Welle 30 drehfest verbundene Klemm- bzw. Spannvorrichtung mit der Welle 30 drehfest verbunden sind.

Fig. 11 zeigt in einer Seitenansicht entsprechend Fig. 7 ein Kettenglied 50, das mit einem Mitnehmer M versehen ist, wobei es sich um einen der Mitnehmer M1 bis M8 handeln kann, die in Fig. 2 und 3 an den Kettengliedern 40 zu erkennen sind. Zweckmäßigerweise existieren für eine Fördervorrichtung mit acht Einzelsträngen lediglich vier unterschiedliche mit Mitnehmer versehene Kettenglieder, wie sie in Fig. 12 bis 15 in einer Draufsicht dargestellt sind. Das einteilig mit dem Mitnehmer M hergestellte Kettenglied 50 entspricht im übrigen der Ausführung nach Fig. 6 bis 8 und ist selbstverständlich damit kompatibel, so daß ein in Fig. 1 bis 5 dargestellter Einzelstrang damit herstellbar ist. Fig. 12 zeigt eine Anordnung des Mitnehmers, die dem Mitnehmer M1 oder M8 nach Fig. 1 bis 5 entspricht, wobei das Kettenglied 50 ersichtlich lediglich um 180° gedreht werden muß, um für den Einzelstrang 2 oder 9 geeignet zu sein. Entsprechendes gilt für die Kettenglieder nach Fig. 13 (geeignet für die Förderstränge 3 oder 8), nach Fig. 14 (geeignet für die Förderstränge 4 oder 7) und Fig. 15 (geeignet für Förderstränge 5 und 6). Die gewünschten gegenseitigen Abstände der einzelnen Mitnehmer eines Einzelstrangs (Länge einer "Gruppe" von Stellplätzen auf dem Förderstrang 1), die in Fig. 1 und 2 mit A bezeichnet sind, werden dadurch erhalten, daß eine geeignete Anzahl von nicht mit Mitnehmern versehenen Kettengliedern 40 zwischen je zwei mit Mitnehmern versehene Kettenglieder 50 eingesetzt wird. Bei einem derartigen Aufbau sind die gegenseitigen Abstände in Stufen veränderlich, die der Länge eines Kettenglieds 40 entsprechen.

### Bezugszeichenliste

- 1: Förderstrang
- 2 bis 9: Einzelstrang
- 10: Justierwalze
- 12: Förderrichtung
- 15.1 bis 15.5: Schalen
- 22 bis 29: Kettenrad
- 30: Welle
- 31: Bohrung
- 32: Reibflanke
- 33: Zahn
- 40: Kettenglied
- 41: Zapfenabschnitt
- 42: Zapfen
- 43: Buchsenabschnitt
- 44: Zapfenaufnahmebohrung
- 45: Oberseite
- 46: Eingriffsvorsprung
- 50: Kettenglied

- A: Abstand zweier Mitnehmer eines Förderstrangs
- B1 bis B8: Abstände zwischen Mitnehmern unterschiedlicher Einzelstränge
- C: Abstand von zu transportierenden Gegenständen
- M: Mitnehmer
- M 1: Mitnehmer auf Einzelstrang 2
- M2: Mitnehmer auf Einzelstrang 3
- M3: Mitnehmer auf Einzelstrang 4
- M4: Mitnehmer auf Einzelstrang 5
- M5: Mitnehmer auf Einzelstrang 6
- M6: Mitnehmer auf Einzelstrang 7
- M7: Mitnehmer auf Einzelstrang 8
- M8: Mitnehmer auf Einzelstrang 9

## Patentansprüche

1. Fördervorrichtung zum Transportieren von Gegenständen (15.1 ... 15.5), mit einem endlos umlaufend geführten Förderstrang (1), der aus jeweils endlos umlaufend geführten Einzelketten (2 ... 9) gebildet ist, von denen jede in gegenseitigen Abständen angeordnete Mitnehmer (M1 ... M8) aufweist, wobei die Einzelketten (2 ... 9) bezüglich ihrer Umlaufstellungen relativ zueinander verstellbar sind, so daß die gegenseitigen Abstände (B1 ... B8) zwischen den Mitnehmern unterschiedlicher Einzelketten (2 ... 9) gleichzeitig verstellbar sind, **dadurch gekennzeichnet , daß** jede Einzelkette (2 ... 9) über ein Kettenrad (22 ... 29) geführt ist, das mit Reibflanken (32) versehen ist, wobei die Kettenräder (22 ... 29) benachbart zueinander paketartig auf einer Welle (30) angeordnet sind und in axialer Richtung zusammendrückbar und mit einer drehfest mit der Welle (30) verbundenen Kupplungsvorrichtung verriegelbar sind, so daß die Kettenräder (22 ... 29) in einem Kupplungszustand mittels Reibschluß an den Reibflanken (32) drehfest miteinander und mit der Welle (30) verbunden sind, und in einem Verstellzustand jedes Kettenrad (22 ... 29) relativ zu den anderen und zu der Welle (30) drehbar ist.

2. Fördervorrichtung nach Anspruch 1, **dadurch gekennzeichnet, daß** die Mitnehmer (M 1 ... M8) auf den Einzelketten (2 ... 9) in Förderrichtung (12) verstellbar gehalten sind.

3. Fördervorrichtung nach einem der vorangehenden Ansprüche, **dadurch gekennzeichnet, daß** die Mitnehmer jeder Einzelkette in festen, insbesondere gleichen gegenseitigen Abständen (A) angeordnet sind.

4. Fördervorrichtung nach einem der vorangehenden Ansprüche, **dadurch gekennzeichnet, daß** die Mitnehmer (M1 ... M8) alle Einzelketten quer zur Förderrichtung übergreifende Mitnehmerleisten aufweisen.

5. Fördervorrichtung nach einem der vorangehenden Ansprüche, **dadurch gekennzeichnet, daß** auf jeder Einzelkette (2 ... 9) die gleiche Anzahl von Mitnehmern (M1 ... M8) angeordnet ist.

6. Fördervorrichtung nach einem der vorangehenden Ansprüche, **dadurch gekennzeichnet, daß** sämtliche Einzelkette (2 ... 9) über eine Justierwalze (10) geführt sind, die aus nebeneinander angeordneten, in unterschiedliche Drehstellungen relativ zueinander verstellbaren, jeweils eine Einzelkette (2 ... 9) aufnehmenden Kettenrädern (22 ... 29) gebildet ist.

7. Fördervorrichtung nach Anspruch 6, **dadurch gekennzeichnet, daß** die Kettenräder (22 ... 29) stufenlos oder stufenweise rastend relativ zueinander verstellbar sind.

8. Fördervorrichtung nach Anspruch 6 oder 7, **dadurch gekennzeichnet, daß** die Justierwalze (10) als Umlenk- und/oder Antriebseinrichtung ausgebildet ist.

9. Fördervorrichtung nach einem der vorangehenden Ansprüche, **dadurch gekennzeichnet, daß** die Ketten wenigstens teilweise aus Kunststoff bestehen.

10. Fördervorrichtung nach einem der vorangehenden Ansprüche, **dadurch gekennzeichnet, daß** die Ketten aus einteilig ausgebildeten, miteinander verrastbaren Kettengliedern (40; 50) bestehen, die jeweils einen Zapfenabschnitt (41) mit zwei zylindrischen Zapfen (42) und einen gegabelten Buchsenabschnitt (43) mit Zapfenaufnahmebohrungen (44) aufweisen.

11. Fördervorrichtung nach Anspruch 10, **dadurch gekennzeichnet, daß** jedes Kettenglied (40; 50) einen Eingriffsvorsprung (46) zum formschlüssigen Zusammenwirken mit einem Ketten- bzw. Antriebsrad (22 ... 29) aufweist.

12. Fördervorrichtung nach Anspruch 10 oder 11, **dadurch gekennzeichnet, daß** die Kettenglieder (40; 50) gerade Oberkanten oder ebene Oberseiten (45) aufweisen, so daß ebene Stellflächen für zu transportierende Gegenstände (15.1 ... 15.5) gebildet werden.

13. Fördervorrichtung nach einem der Ansprüche 10 bis 12, **dadurch gekennzeichnet, daß** die Mitnehmerleisten einteilig mit einem Kettenglied (50) ausgebildet sind.

## Claims

1. A conveyor device for transporting articles (15.1 ... 15.5), with a conveyor run (1) which is guided so as to revolve endlessly and which is formed from individual chains (2 ... 9) each guided to revolve endlessly and each of which comprises drivers (M1 ... M8) disposed at mutual distances, wherein in respect of their revolution positions the individual chains (2 ... 9) are adjustable relatively to one another so that the mutual distances (B1 ... B8) between the drivers of different individual chains (2 ... 9) are adjustable simultaneously, **characterised in that** each individual chain (2 ... 9) is trained over a chain wheel (22 ... 29) which is provided with friction flanks (32), the chain wheels (22 ... 29) being disposed adjacent one another in the form of a packet on a shaft (30) and being compressible in the axial direction and being lockable with a coupling device connected non-rotatably to the shaft (30) so that in a coupling state the chain wheels (22 ... 29) are connected non-rotatably by frictional engagement of the friction flanks (32) to one another and to the shaft (30) and in an adjustment state each chain wheel (22 ... 29) is rotatable relatively to the others and to the shaft (30).

2. A conveyor device according to claim 1, **characterised in that** the drivers (M1 ... M8) are held adjustably in the conveying direction (12) on the individual chains (2 ... 9).

3. A conveyor device according to any one of the preceding claims, **characterised in that** the drivers of each individual chain are disposed at fixed distances (A), particularly equal mutual distances (A).

4. A conveyor device according to any one of the preceding claims, **characterised in that** the drivers (M1 ... M8) have driver ledges which engage over all the individual chains transversely of the conveying direction.

5. A conveyor device according to any one of the preceding claims, **characterised in that** the same number of drivers (M1 ... M8) is disposed on each individual chain (2 ... 9).

6. A conveyor device according to any one of the preceding claims, **characterised in that** all the individual chains (2 ... 9) are trained over an adjusting roller (10) formed from chain wheels (22 ... 29) disposed side by side and adjustable relatively to one another into different rotary positions and each receiving an individual chain (2 ... 9).

7. A conveyor device according to claim 6, **characterised in that** the chains wheels (22 ... 29) are adjustable steplessly or stepwise lockingly relatively to one another.

8. A conveyor device according to claim 6 or 7, **characterised in that** the adjusting roller (10) is constructed as a deflecting and/or drive device.

9. A conveyor device according to any one of the preceding claims, **characterised in that** the chains consist at least partially of plastic.

10. A conveyor device according to any one of the preceding claims, **characterised in that** the chains consist of chain links (40; 50) which are formed in one piece and are lockable to one another and which each have a pin portion (41) with two cylindrical pins (42) and a forked bush portion (43) with pin receiving boreholes (44).

11. A conveyor device according to claim 10, **characterised in that** each chain link (40; 50) has an engagement projection (46) for positive co-operation with a chain wheel or drive wheel (22 ... 29).

12. A conveyor device according to claim 10 or 11, **characterised in that** the chain links (40; 50) have straight top edges or plane top sides (45) so that plane receiving surfaces are formed for the articles (15.1 ... 15.5) for transport.

13. A conveyor device according to any one of claims 10 to 12, **characterised in that** the driver ledges are formed in one piece with a chain link (50).

## Revendications

1. Dispositif de convoyage d'objets (15.1 ... 15.5) comprenant un brin de convoyage (1) réalisé en forme de boucle sans fin et composé de chaînes individuelles (2 ... 9) dont chacune est réalisée en forme de boucle sans fin et comprend des taquets d'entraînement (M1 ... M8) écartés les uns des autres à une distance donnée, les chaînes individuelles (2 ... 9) pouvant être réglées les unes par rapport aux autres de façon à définir les écartements (B1 ... B8) entre les taquets d'entraînement des différentes chaînes individuelles (2 ... 9), **caractérisé en ce que** chaque chaîne individuelle (2 ... 9) passe par un pignon (22 ... 29) muni de flancs de friction (32), les pignons (22 ... 29) adjacents étant disposés en paquet sur un axe (30) de façon à pouvoir être serrés les uns contre les autres dans le sens axial et verrouillés avec un dispositif d'accouplement relié à l'axe (30) pour obtenir un assemblage solidaire dans le sens de la rotation entre les pignons (22 ... 29) à l'état d'accouplement par friction, tandis que les pignons (22 ... 29) peuvent être décalés, à l'état de réglage, dans le sens de la rotation les uns par rapport aux autres et par rapport à l'axe (30).

2. Dispositif de convoyage selon la revendication 1, **caractérisé en ce que** les taquets d'entraînement (M1 ... M8) sont fixés sur les chaînes individuelles (2 ... 9) de manière réglable dans le sens de convoyage (12).

3. Dispositif de convoyage selon l'une quelconque des revendications précédentes, **caractérisé en ce que** les taquets d'entraînement de chaque chaîne individuelle sont disposés à des distances (A) fixes, notamment identiques les uns par rapport aux autres.

4. Dispositif de convoyage selon l'une quelconque des revendications précédentes, **caractérisé en ce que** les taquets d'entraînement (M1 ... M8) de toutes les chaînes individuelles comprennent des barrettes d'entraînement disposées dans le sens transversal par rapport au sens de convoyage.

5. Dispositif de convoyage selon l'une quelconque des revendications précédentes, **caractérisé en ce qu'**un nombre identique de taquets (M1 ... M8) est disposé sur chaque chaîne individuelle (2 ... 9).

6. Dispositif de convoyage selon l'une quelconque des revendications précédentes, **caractérisé en ce que** toutes les chaînes individuelles (2 ... 9) passent par un tambour d'ajustage (10) composé de plusieurs pignons (22 ... 29) adjacents réglables les uns par rapport aux autres dans le sens de la rotation, chaque pignon entraînant une chaîne individuelle (2 ... 9).

7. Dispositif de convoyage selon la revendication 6, **caractérisé en ce que** les pignons (22 ... 29) peuvent être réglés les uns par rapport aux autres de manière continue ou par crans d'enclenchement échelonnés.

8. Dispositif de convoyage selon la revendication 6 ou 7, **caractérisé en ce que** le tambour d'ajustage (10) est réalisé de façon à constituer un dispositif de renvoi et/ou d'entraînement.

9. Dispositif de convoyage selon l'une quelconque des revendications précédentes,
**caractérisé en ce que** les chaînes sont fabriquées au moins partiellement en matière plastique.

10. Dispositif de convoyage selon l'une quelconque des revendications précédentes, **caractérisé en ce que** les chaînes comprennent des maillons (40 ; 50) réalisés sous forme monobloc et assemblés par enclenchement, chaque maillon comprenant une section à tenons (41) avec deux tenons cylindriques (42) et une section à douilles (43) en forme de chape avec des trous (44) recevant les tenons cylindriques.

11. Dispositif de convoyage selon la revendication 10, **caractérisé en ce que** chaque maillon (40 ; 50) comprend une saillie (46) assurant l'accouplement mécanique avec un pignon (22 ... 29).

12. Dispositif de convoyage selon la revendication 10 ou 11, **caractérisé en ce que** les bords supérieurs et faces supérieures (45) des maillons (40 ; 50) sont rectilignes de façon à former des surfaces d'appui planes pour les objets (15.1 ... 15.5) à transporter.

13. Dispositif de convoyage selon l'une quelconque des revendications 10 à 12, **caractérisé en ce que** les ensembles (50) comprenant la barrette d'entraînement et le maillon sont réalisés sous forme monobloc.
